(19) **Europäisches Patentamt**
**European Patent Office**
**Office européen des brevets**

(11) **EP 4 765 606 A1**

(12) **EUROPEAN PATENT APPLICATION**

(43) Date of publication:
**24.06.2026 Bulletin 2026/26**

(21) Application number: **25217592.2**

(22) Date of filing: **21.11.2025**

(51) International Patent Classification (IPC):
**H02M 1/12** (2006.01)       **H02M 7/219** (2006.01)
**H02M 7/493** (2007.01)       H02M 7/23 (2006.01)
**H02M 7/5387** (2007.01)

(52) Cooperative Patent Classification (CPC):
**H02M 1/123; H02M 7/219; H02M 7/493;** H02M 7/23;
H02M 7/5387

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024 GB 202418803**

(71) Applicant: **Rolls-Royce plc**
**London N1 9FX (GB)**

(72) Inventors:
• **Briff, Pablo**
  **Derby DE24 8BJ (GB)**
• **Trainer, David**
  **Derby DE24 8BJ (GB)**
• **Sweet, Mark**
  **Derby DE24 8BJ (GB)**

(74) Representative: **Rolls-Royce plc**
**P.O. Box 31**
**IP Department (SinA-48)**
**Derby Derbyshire DE24 8BJ (GB)**

(54) **COMMON-MODE CONTROL FOR AC-TO-DC POWER CONVERTERS**

(57)    The foregoing describes a power converter apparatus (200) with at least a first power converter (101-1) and a second power converter (101-2) connected in parallel, so as to each receive an AC voltage generated by an electrical machine (104) and output a DC voltage on a DC bus (105P, 105N). Each of first and second power converters (101-1, 101-2) is coupled to respective first and second winding arrangements (102-1, 102-2) for receiving the AC voltages, and the first winding arrangement is grounded by a first impedance (201-1) and the second winding arrangement is grounded by a second impedance (201-2). The first impedance (201-1) has an effective impedance value which is different to that of the second impedance (202-1) such, in use, a zero-sequence current between the first and second power converters at least partly cancels a common-mode voltage component.

FIG. 2

**Description**

**FIELD**

This disclosure relates to AC-to-DC power converters and, in particular, to multiple AC-to-DC converters connected in parallel to the same electrical machine, and provides methods and apparatus for controlling common-mode voltages so as to reduce common-mode harmonic components.

**BACKGROUND**

For some use cases, it has been proposed to connect two or more 3-phase AC-to-DC power converters in parallel to the same electrical machine. The AC-to-DC power converters may be connected, on the AC side, to the same machine shaft which constitutes an AC parallel electrical connection. At the DC side, the converters are connected to the same DC busbar, which constitutes a DC parallel electrical connection. This arrangement can provide an increased power output. The multiple AC-to-DC converters may also provide redundancy in case of a fault in one of the converters.

One issue that can arise with such a parallel connection is that the parallel connection can add to voltage and/or current harmonics at either the AC point of connection or DC point of connection. Such voltage and/or current harmonics can distort the DC output voltage and can have a detrimental effect on power quality and/or can impact aging of various components.

**SUMMARY**

According to a first aspect there is provided a power converter apparatus comprising a first power converter configured to receive a first AC voltage generated by a first electrical machine and output a DC voltage on a DC bus and a second power converter connected in parallel with the first power converter to receive a second AC voltage generated by the first electrical machine and output the DC voltage on the DC bus. The first power converter is coupled to a first winding arrangement for receiving the first AC voltage and the first winding arrangement is grounded by a first impedance and the second power converter is coupled to a second winding arrangement for receiving the second AC voltage and the second winding arrangement is grounded by a second impedance. The first impedance has an effective impedance value which is different to that of the second impedance such, in use, a zero-sequence current between the first and second power converters at least partly cancels a common-mode voltage component.

In some implementations, the first impedance may have an effective impedance value which is different to that of the first impedance such, in use, a zero-sequence impedance of the first power converter is 180° out of phase with a zero-sequence impedance of the second power converter. In some examples, the first impedance may have an effective impedance value which is different to that of the first impedance such, in use, a zero-sequence impedance of the first power converter has a first value $Z_{0\text{-}1}$ and a zero-sequence impedance of the second power converter has a second value $Z_{0\text{-}2}$, where $Z_{0\text{-}1} = -Z_{0\text{-}2}$. In some examples, the first impedance may be a capacitive impedance with a capacitance value Cg and the second impedance may be an inductive impedance with an inductance value Lg. The capacitance value Cg and inductance value may be related by $Cg = 1/\omega^2 Lg$, where $\omega$ is a frequency of the common-mode voltage component. $\omega$ may be equal to a switching frequency of the first and second power converters or harmonic thereof. In some examples, the first and second power converters may be configured to implement triplen harmonic injection and $\omega$ is equal to a frequency of the triplen harmonic injection.

In some implementations, the first impedance may comprise one or more capacitors and the second impedance comprises one or more inductors.

In some implementations, at least one of the first and second impedances may comprise an active impedance device for providing, in use, an emulated impedance.

In some implementations, each of the first and second winding arrangements may comprise a respective star winding arrangement and the first and second impedances are respectively connected between a respective star-point of the first and second winding arrangements and ground. The first and second winding arrangements are configured as a split-winding arrangement.

In some implementations, each of the first and second power converters comprise a three-phase two-level voltage source converter.

The power converter apparatus may additionally comprise a DC grounding impedance connecting a voltage rail of the DC bus to ground.

Aspects also relates to the power converter apparatus together with the electrical machine. Aspects also relate to a vehicle comprising the power converter apparatus of any preceding claim. The vehicle may be a land, sea or air vehicle, for example, an aircraft.

## BRIEF DESCRIPTION OF THE DRAWINGS

Embodiments will now be described by way of example only with reference to the accompanying drawings, in which:

FIG. 1a illustrates the principles of parallel connection of two AC-to-DC power converters to the same electrical machine;
FIG. 1b illustrates the winding arrangement and power converters of FIG. 1a in more detail;
FIG. 2 illustrates a parallel arrangement of AC-to-DC power converters with different AC ground impedances;
FIG. 3 illustrates a model of a zero-sequence circuit for the arrangement of FIG. 2;
FIG. 4 illustrates a reduced version of the model of FIG. 4;
FIG. 5 illustrates a parallel arrangement of AC-to-DC power converters with a controller for controlling modulation parameters of the power converters; and
FIG. 6 illustrates an example workflow for determining suitable modulation parameters.

## DETAILED DESCRIPTION

AC-to-DC power converters are used in a number of different applications. For instance, land, air or sea vehicles may have one or more engines for providing motive power and also driving a rotary electrical machine to generate AC power. An AC-to-DC power converter may be used to provide a DC source of power for onboard electrical systems. In some applications, it may be desirable to provide more than one AC-to-DC power converter, with the AC-to-DC power converters connected in parallel.

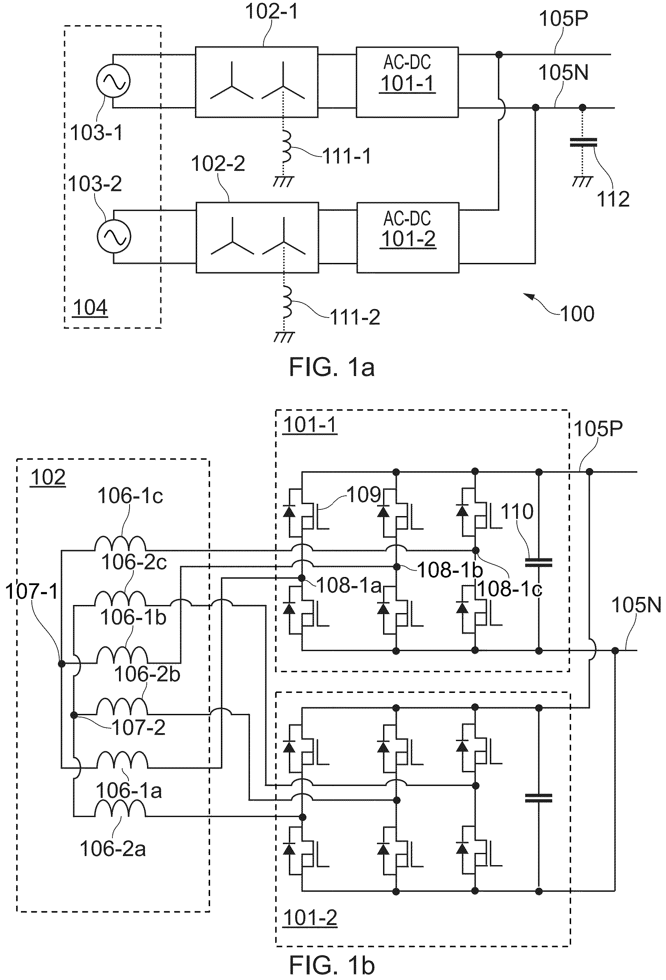

FIG. 1a and FIG. 1b shows a simplified schematic view of a power converter arrangement 100 comprising two AC-to-DC power converters 101-1 and 101-2 connected in parallel. Note, in the following description, components that are similar to one another may be identified by the same base reference numeral, but with different suffixes to illustrate the different components where necessary, e.g. the power converters are identified by the base reference numeral 101 but with the suffixes -1 and -2. When referring to any such component generically or the components collectively, the base reference numeral may be used without the suffix.

FIG. 1a illustrates that each of the power converters 101-1 and 101-2 is connected, via a respective three-phase winding arrangement 102-1 and 102-2 to a respective AC source 103-1 and 103-2, where the AC sources are from the same electrical machine 104 and constitute a parallel AC connection. Note that FIG. 1a illustrates the winding arrangements 102-1 and 102-2 as distinct from one another for clarity, and illustrates the winding arrangements as transformers, each having its own separate primary and secondary windings. It should be understood, however, that in some implementations, the secondary windings may be implemented in a split winding arrangement as illustrated in FIG. 1b with respect to a common primary winding and/or in some applications the winding arrangements may be implemented as part of the windings of the electrical machine, rather than as separate transformers.

FIG. 1a illustrates that, in this example, each winding arrangement 102 has a wye-wye (or star-star) configuration, but it will be understood that other arrangements, such as delta-wye for example, could be implemented. The DC outputs of each of the power converters 101-1 and 101-2 are connected to the same DC bus 105, comprising positive rail 105P and negative rail 105N.

FIG. 1b illustrates in more detail part of the winding arrangement 102 and the power converters 101. FIG. 1b illustrates just the secondary windings of the winding arrangement 102 for clarity. A first set of three phase windings 106-1a, 106-1b and 106-1b are connected, in this arrangement, between a common star-point 107-1 and a respective AC node 108-1a, 108-1b and 108-1c of the relevant phase of the power converter 101-1. A second set of three phase windings 106-2a, 106-2b and 106-2b are connected between a common star-point 107-2 and the respective AC nodes 108-2a, 108-2b and 108-2c of the power converter 101-2. In the example of FIG. 1b, the power converters 101 are illustrated as two-level voltage source converters (VSCs) and thus each AC node 108 of each phase is connected to the positive bus 105P and negative bus 105N by respective converter arms, each of which comprises a valve 109 formed by one or controlled switching elements, which may be any suitable semiconductor switching device such as suitable MOSFETs or insulated gate bipolar transistors (IGBTs). Each power converter also has a DC link capacitance 110 connected between the rails of the DC output bus. As will be well understood by one skilled in the art, the switching of the valves 109 the AC voltage is controlled, generally in accordance with a PWM (pulse-width-modulation) switching control, so as to convert the AC voltage to a DC voltage on the DC bus 105. Each power converter 101-1 and 101-2 will thus generally have its own switching controller (not separately illustrated) to control the switching of the phases of the power converter. It will be understood, however, that other designs of VSC or modular multilevel converters (MMCs) could be implemented for the power converters 101.

Referring back to FIG. 1a, in some implementations some grounding may conventionally be provided on the AC side and/or the DC side of the power converters 101. FIG. 1a illustrates that the star-points of the secondary windings, i.e.

the star-points 107-1 and 107-2 illustrated in FIG. 1b, may each be connected to ground via a suitable grounding impedance, which in this example is a respective inductance 111-1 and 111-2. An inductive coupling may be used for the grounding of each power converter on the AC side to provide a relatively solid grounding path at low frequencies in the event of a fault. FIG. 1a also illustrates that the DC output may be grounded, e.g. by grounding the negative rail 105N to ground via a suitable grounding impedance 112, such as a capacitance, which may be used to provide a relatively weak grounding path for low frequencies but to provide a solid grounding path for high frequency components.

The parallel arrangement of power converters 101-1 and 101-2 can provide a higher power output than would be possible using a single power converter alone and also provides some redundancy in the event of a fault with one of the power converters.

However, one problem that can arise is that the operation of each of the power converters can result in some common-mode voltage component and that the common-mode components of the two power converters may add together in a way which is undesirable.

For example, each power converter may be controlled, in use, to implement triplen harmonic injection (THI). THI is a known technique in which voltages at a triplen harmonic frequency are effectively applied to the voltages of the individual phases of the power converter to improve performance and efficiency. Whilst the triplen components can improve performance, they can result in a common-mode voltage or current component at either the AC or DC point of connection. Whilst the three-phase common-mode voltages cancel out on a phase-to-phase or line-to-line differential output, as the differential outputs correspond to the difference between the voltages of the phases, common-mode voltages at the AC point of coupling appear as a phase-to-ground or line-to-ground voltage, which can lead to a current flow that leads to wear of the bearings of the electrical machine and thus leads to issues with aging.

The triplen voltages for each individual converter will generally be applied in phase with the fundamental AC voltage and, for a parallel connection of two (or more) power converters, as each power converter will see essentially the same AC system voltage and AC system impedance, the triplen components for each power converter will generally be expected to be in phase with one another. This means that the common-mode components from each power converter can add together to provide an increased harmonic distortion.

In addition, other unwanted voltage or current components, such as other harmonics components may arise from the switching operation of each power converter. As discussed above, the valves of the converter arms of the power converters 101 are generally controlled by suitable PWM control signals and the switching control can introduce components at the switching frequency and harmonics thereof which can be common to all phases and thus appear as a common-mode component. For parallel connected power converters, the same carrier signals may be used to generate the PWM control signals for each of the converters which means that the common-mode components introduced by each power converter may additively combine to increase the unwanted distortion.

To address the issue of such harmonic distortion, passive filtering may be applied at the DC point of connection. However, providing the necessary filtering in the case where the common-mode components from two (or more) power converters additively combine may require relatively large passive filtering arrangements to provide sufficient filtering, which adds to the cost of the power converter arrangement and also to the size and weight of the power converter arrangement, which may be disadvantageous in some applications such as aviation or other transport.

Embodiments of the present disclosure provide arrangements and methods for operating parallel connected power converters that at least mitigate at least some of the above-mentioned issues. In particular, the converters may be arranged such that operation of the converters provides at least some active cancellation of common-mode components so as to reduce the resultant common-mode component at the AC point of connection and/or DC point of connection. This can reduce the amount of passive filtering required, with consequent savings in cost, size and weight.

### Grounding Strategy

In some embodiments, the grounding strategy of the power converters may be configured to reduce the overall common-mode voltage. In particular, the grounding strategy may be configured such that, in use, a zero-sequence current may flow between the parallel converters that reduces the overall common-mode voltage.

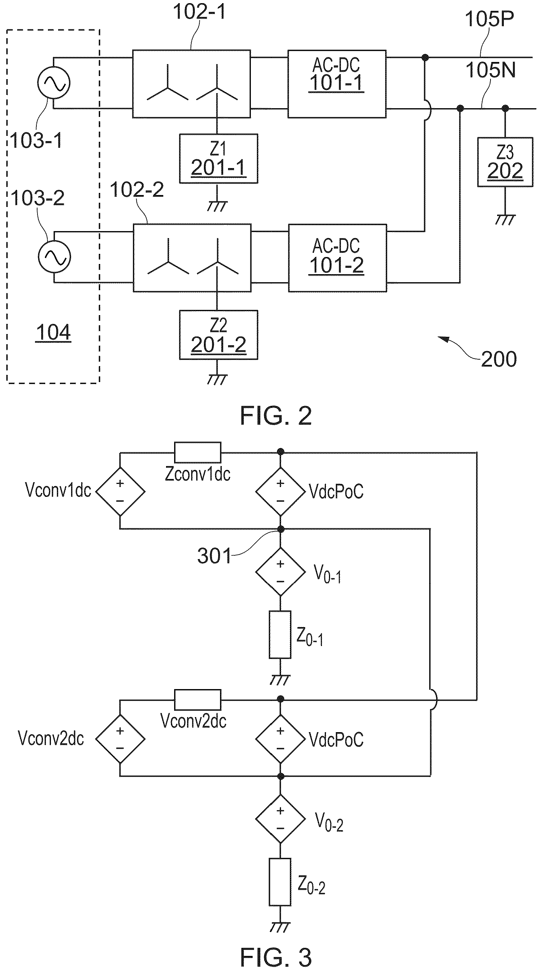

FIG. 2 illustrates a power converter arrangement 200 according to an embodiment, in which similar components as those discussed previously are identified by the same reference numerals. The power converter arrangement 200 comprises two AC-to-DC power converters 101-1 and 101-2 connected to the same electrical machine 104 in parallel, via winding arrangements 102-1 and 102-2. FIG. 2, like FIG. 1, illustrates the winding arrangements 102-2 and 102-2 as separate transformer arrangements for clarity, but again it should be understood that the secondary windings may be arranged as split windings and/or may be implemented as windings within the electrical machine 104 without the need for separate transformers. In the embodiment of FIG. 2, the first converter 101-1 is grounded on the AC side by a first impedance Z1 and the second converter 101-2 is grounded on the AC side by a second impedance Z2. Unlike the conventional grounding strategy discussed with reference to FIG. 1a, the first impedance Z1 is different to the second impedance Z2 and the first and second impedances may be selected such that the zero-sequence impedance of the first power converter 101-1 is equal and opposite to the zero-sequence impedance of the second power converter 101-2.

One skilled in the art will be aware of Fortescue's theorem, which states that any three-phase voltage source of a given electrical angular frequency $\omega$ can be decomposed into three voltage sources: a positive-phase sequence (PPS) voltage source, a negative-phase sequence (NPS) voltage source, and a zero-phase sequence (ZPS) voltage source. A PPS source is composed of a balanced or symmetrical three-phase system voltage rotating at angular frequency $\omega$ in a positive direction (also noted as rotating at "$+\omega$"). A NPS voltage source is composed of a balanced three-phase system voltage rotating at angular frequency $\omega$ in a negative direction (also noted as rotating at "$-\omega$"). A ZPS voltage does not rotate in the phasor plane, but it is seen as a common voltage to all three phases of a voltage source. The ZPS voltage is calculated as the instantaneous sum of each phase voltage, divided the number of phases. An analogous symmetrical component decomposition can be made for three-phase currents.

An equivalent circuit can be derived for each symmetrical component (also called sequence), by using the superposition principle of linear systems. Each symmetrical component has its own equivalent circuit, and therefore difference impedances are presented in each circuit. The impedances that are present in the ZPS equivalent circuit are zero-sequence impedances. For a DC circuit, the zero-sequence impedance can be considered equivalent to the common-mode impedance as both common-mode (CM) and zero-sequence (ZS) currents flow through a ground or earth connection. In particular, if there is no ground connection in place, then the ZS impedance is infinity (open circuit equivalent).

FIG. 3 illustrates a DC model of the converter arrangement 200 shown in FIG. 2. FIG. 3 illustrates that each converter 101-1 and 101-2 may be represented as a respective DC voltage Vconv1dc and Vconv2dc applied via a respective DC converter impedance Zconv1dc and Zconv2dc in parallel with the DC voltage VdcPoC at the DC point of connection. FIG. 3 also illustrates that each converter has a respective zero-sequence voltage $V_{0-1}$ and $V_{0-2}$ and a respective zero-sequence impedance $Z_{0-1}$ and $Z_{0-2}$ in a path to ground from a node 301.

It will be understood that, had it not been because of the zero-sequence impedance $Z_{0-1}$ and $Z_{0-2}$, the zero-sequence voltages $V_{0-1}$, $V_{0-2}$ synthesized by each power converter 101-1 and 101-2 as seen by the DC point of connection, would need to be equal in magnitude, frequency, and phase. However, the zero-sequence impedance for each power converter makes it possible to control each converter's zero-sequence voltage independently.

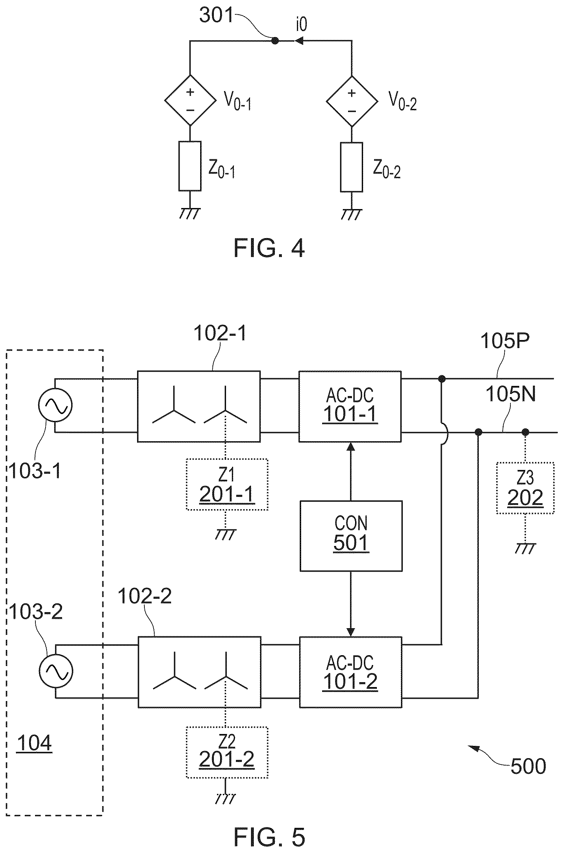

FIG. 4 illustrates a reduced zero-sequence DC-equivalent mode of the converter arrangement 100 and illustrates that a zero-sequence current i0 may be controlled to flow between the parallel connected power converters. The zero-sequence common-mode voltage from node 301 to ground, denoted as voltage $V_{CM}$, can be minimized to zero by controlling this current i0. It will be understood that:

$$V_{CM} = V_{0-1} + i0.Z_{0-2} \qquad\qquad \text{Eqn. 1}$$

and

$$V_{0-1} - V_{0-1} + i0.Z_{0-1} + i0.Z_{0-2} \qquad\qquad \text{Eqn. 2}$$

which gives:

$$V_{CM} = \frac{V_{0-1}Z_{0-2} + V_{0-2}Z_{0-1}}{Z_{0-1} + Z_{0-2}}$$

$$\text{Eqn. 3}$$

Therefore, the voltage $V_{CM}$ is zero when:

$$V_{0-1}Z_{0-2} = -V_{0-2}Z_{0-1} \qquad\qquad \text{Eqn. 4}$$

It will be understood that if the zero-sequence impedances of the two converters were the same as one another, as would be expected if the same grounding approach were used for each power converter, the voltage $V_{CM}$ could only be minimised to zero if the zero-sequence voltages of each of the power converters 101-1 and 101-2 were equal and opposite, i.e. of equal magnitude but with a 180° phase difference. However, as discussed above, the zero-sequence voltages of the converter will generally comprise components, such as THI voltages, which will generally be in phase with one another. To provide for a reduction or minimization of the common-mode voltage $V_{CM}$ for zero-sequence voltages which would be expected to be substantially equal in phase and magnitude, the power converters may be arranged such that $Z_{0-1} = -Z_{0-2}$, i.e. the DC side zero-sequence impedances of each of the first and second power converters are configured to exhibit a phase difference of 180°.

There are various ways that the power converters may be configured to meet the condition that the zero-sequence impedances are equal and opposite, i.e. that $Z_{0-1} = -Z_{0-2}$.

In the example of FIG. 2, the AC side grounding impedances Z1 and Z2 are selected to satisfy this condition for the zero-sequence impedances for a given angular frequency $\omega$ of interest. Thus, for example, the first impedance Z1 may be an inductive impedance with an inductance Lg connected to the star point 107-1. This will provide a zero-sequence impedance $Z_{0-1}$ for the first power converter equal to $j\omega$Lg (where j is $\sqrt{-1}$ as will be understood by one skilled in the art). This grounding strategy provides a solid ground reference at DC and low frequencies. The second impedance Z2 may be a capacitive impedance with a capacitance Cg connected to the star point 107-2. This will provide a zero-sequence impedance $Z_{0-2}$ for the second power converter equal to $-j/\omega$Cg. This grounding strategy provides a good ground reference at high frequencies. By setting the value of the capacitance Cg = $1/\omega^2$Lg, the condition $Z_{0-1} = -Z_{0-2}$ can thus be satisfied.

The value of the angular frequency $\omega$ of interest may be selected based on the frequency of common-mode components that are to be cancelled. In some cases, the angular frequency $\omega$ of interest may be at or around the converter's switching frequency fs, i.e., $\omega=2\pi$fs, as this contains most of the harmonic distortion (harmonic energy) due to the PWM modulation strategy and higher-order harmonic frequencies or multiples of the switching frequency can be more easily attenuated or filtered by a small passive or active filter, since the attenuation capability of the filters naturally grow as a function of $\omega$.

One or both of the first and second impedances Z1 and Z2 could be implemented by one or more passive components. For instance, the first impedance Z1 may be provided by a suitable inductor, or an arrangement of more than one inductor chosen to provide a desired overall inductance value. Likewise, the second impedance Z2 may be provided by a capacitor or an arrangement of more than one capacitor arranged to provide a desired overall capacitance value. In some embodiments, however, at least one of the impedances Z1 and Z2 may be provided by an active impedance, i.e. provided by one or more active components such as switches that can be controlled to emulate a desired impedance. For instance, where the second impedance Z2 is a capacitance, this could be emulated by an active arrangement akin to a VSC, as will be understood by one skilled in the art. Using an active arrangement to emulate the impedance may be advantageous in allowing the angular frequency $\omega$ of interest for which $Z_{0-1} = -Z_{0-2}$ is satisfied to be varied in use. This may allow the grounding strategy to be adapted to any change in system parameter, for instance if the value of the inductance of the first impedance Z1 is changed or there is a change in the switching frequency or a change in the AC frequency, and hence the THI frequency. In some use cases, such changes in system parameters may be expected in use. For instance, for some aviation implementations, the motor drives may change the AC frequency with engine speed and aircraft flight demand. In such cases it may therefore be advantageous to implement a grounding strategy with controllable emulated impedances.

The grounding impedances Z1 and Z2 on the AC side of the power converters 101-1 and 101-2 may thus be selected or controlled to be different to one another such that the zero-sequence impedance for each power converter is 180° apart. As illustrated in FIG. 2, there may also be a DC grounding impedance Z3 for providing grounding on the DC side of the converter, e.g. for providing grounding for the negative rail 105N. The DC grounding impedance may be provided by one or more passive components such as or more capacitors, or could be provided by an active arrangement such as a VSC or similar.

The discussion above has focussed on the connection of two power converters in parallel but the principles could be extended to a parallel connection of more than two power converters. For a parallel connection of more than two power converters, the relationship between the zero-sequence impedances of the different power converters would be different, but the principle of grounding the power converter on the AC side with different impedances, such that the resultant zero-sequence impedances of the different power converters are such that common-mode voltages in phase in each of the parallel connected converters lead to a zero-sequence current flow between the converters to minimise the overall common-mode voltage component may be applied.

### *Control of Modulation Parameters*

In some embodiments, one or more parameters of the modulation of the parallel connected power converters may be controlled so that harmonic components generated by each of the power converters at least partially cancel one another. In particular, the modulation control of each of the parallel-connected converters can be tailored to inherently at least partially cancel out certain harmonics in operation. Control of such modulation parameters may be implemented in addition to or instead of the configuration of the grounding strategy as discussed above.

FIG. 5 illustrates a power converter arrangement 500 according to an embodiment, in which similar components as those discussed previously are identified by the same reference numerals. The power converter arrangement 500 comprises two AC-to-DC power converters 101-1 and 101-2 connected to the same electrical machine 104 in parallel. In the embodiment of FIG. 5, a controller 501 is configured to control one or more parameters of the modulation of one or both of the power converters 101-1 and 101-2 so as to maintain a common-mode voltage component at the AC point of coupling below a threshold.

As discussed above, each converter is, in use, controlled by its own switching controller according to a suitable modulation scheme to provide the conversion from AC to DC power. For a two-level VSC 101 such as illustrated in FIG. 1a, the relevant valves of each converter phase, e.g. the high-side valve connecting the AC node of the phase to the positive DC bus 105P and the low-side valve connecting the AC node of the phase to the positive DC bus 105P, are modulated, i.e. turned on and off, by control signals to provide the desired power conversion. The various phases of the power converter may be controlled by any suitable control, such as PWM modulation or space vector modulation, as will be understood by one skilled in the art. For example, PWM control signals may typically be generated by the switching controller for that converter by effectively sampling a reference waveform using a carrier signal. The carrier signal is generally a triangular or sawtooth waveform that ramps up and/or down over a defined excursion range over a certain PWM cycle period, and the reference waveform may be based on the AC waveform. Space vector modulation may involve determining a reference vector based on the reference waveform and synthesising the reference vector from the different active vectors and zero states.

As will be understood be one skilled in the art, there are various different modulation control methods that can be used to generate the relevant control signals for controlling switching or modulation of the phases of each power converter, for instance, for PWM control, the reference waveform may be sampled using natural sampling, or asymmetric or symmetric sampling as will be understood by one skilled in the art. The sampling may be configured to control the timing of just one of a rising or falling edge of each PWM pulse in a single-edged sampling implementation or to control both the rising and falling edges of the PWM pulse in a doubled-edged sampling implementation. For space vector control, there are various ways the reference waveform may be sampled and the reference vector may be generated.

The harmonic components which appear as common-mode voltages at the AC point of coupling have a dependence on the relevant modulation strategy applied for control of the power converters, e.g. on switching frequency of the power converter, and also on the modulation control method.

As noted above, common-mode voltage components from each of the parallel connected power converters can superimpose at the AC point of connection and lead to unwanted current flow with an impact on aging. One way to minimise the overall resultant common-mode voltage at the AC point of connection is to ensure to implement a grounding strategy as described above. However, in some cases it may not be possible or practical to be able to implement a grounding strategy that results in the zero-sequence impedances being equal in magnitude and in phase opposition to one another and/or there may still remain some common-mode components that it would be desirable to supress.

To minimise the harmonic content for both THI and switching frequency content arising from the operation of the converters, the controller 501 can thus be configured to control one or more modulation parameters of each of the parallel-connected converters can be tailored to inherently substantially cancel out certain harmonic components.

To cancel or reduce the common-mode voltage at the AC point of connection with two-parallel connected converters 101-1 and 101-2, various parameters can be selectively modified. One design choice is the modulation control method as discussed above, e.g. whether natural or asymmetric or symmetric PWM modulation or space vector modulation or some other control methodology. However, whilst the choice of modulation control method has an impact on the resultant common-mode components, it is typically impractical to dynamically vary the modulation control method in use and thus, in some implementations the modulation control method may not be varied once selected.

The frequency of interest at which to cancel the harmonics is another parameter that can be selected.

Another modulation parameter that can be modified is the modulation depth, defined as the peak of the phase-to-phase AC output voltage divided by rail-to-rail DC voltage. The desired power level at the AC point of connection can be achieved by a combination of different voltage levels and phase angle displacements between the AC point of connection and the parallel connected converters. Therefore, the modulation depth of operation of one of the power converters could be controllably varied with respect to the modulation depth of operation of the other power converter so as to vary the contribution to the harmonic content at the selected frequency of interest from each of the power converters. Power sharing between the parallel-connected converters can also be varied by virtue of the control of the modulation depth for operation of each power converter.

Another modulation parameter that can be modified to minimise the common-mode voltage at the AC point of connection is the actuation delay, denoted as $T_d$, between the two power converters. The PWM controls signals for controlling switching of the individual power converters will generally be generated independently in each power converter by the relevant switching controller and will be assumed to operate at the same carrier frequency $\omega_c$. However, in practice there may generally be some inevitable time delay in the synchronisation of the power converters, which can lead to circulating currents, instability issues, or other controller-related issues. However, the time delay between switching of the different power converters can also be utilised to control the amount of harmonic current exchange between each power converter at the AC point of connection. In other words, the relative actuation delay between the two parallel connected power converters, translates into a voltage difference between each power converter. Each power converter's series impedances also play a part in the voltage induced by each converter at the AC point of connection, by means of the voltage drop induced in the impedances as a result of a circulating current. The controller 501 may thus regulate the actuation delay difference between the two power converters to control the circulating current between each power converter, as well as the harmonic voltage induced at the AC point of connection. It will be noted that the actuation delay $T_d$ can be reflected as a function of the switching frequency and that a constant, frequency-independent time delay will affect more significantly the higher-order harmonics than the lower-order harmonics, as the actuation delay term represents a larger phase shift as the harmonic order increases.

Another modulation parameter that may be selectively modified in order to minimise undesired harmonic content in the resulting common-voltage voltages at the AC point of connection is the switching frequency of the power converters, e.g. the carrier frequency for PWM modulation.

The controller 501 may thus control one or more of these modulation parameters so that harmonic components arising from operation of each power converter at least partly cancel one another at the AC point of connection, so as to maintain the harmonic content below a desired threshold or otherwise minimise the harmonic content. The controller 501 may be configured to determine the voltage synthesised in each phase of each of the power converters and the resultant common-mode voltage at the AC point of connection and determine whether the common-mode component at the desired frequency of interest is below a certain threshold level and, if not, to iteratively modify one of more of the modulation parameters for one or more of the power converters until the common-mode component at the desired frequency of interest is below the threshold level.

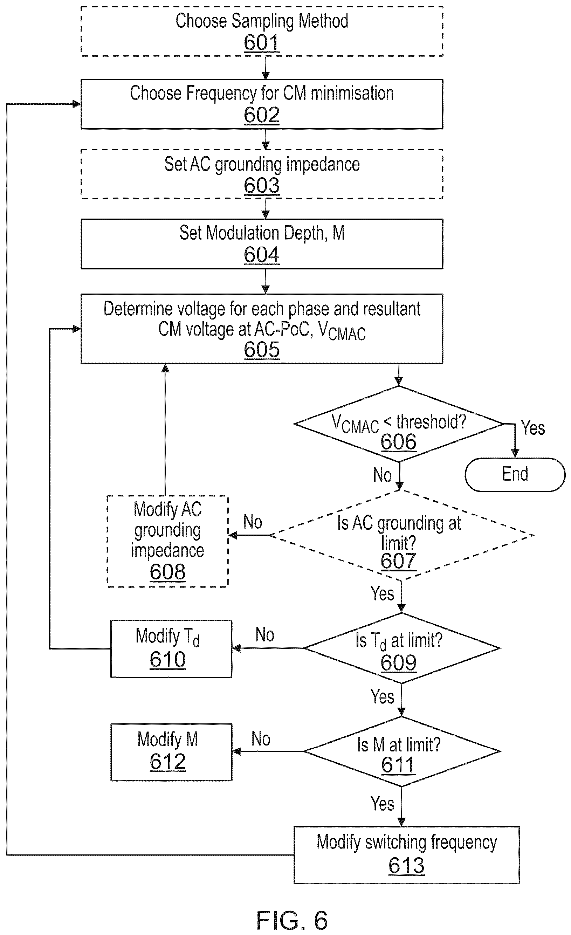

FIG. 6 illustrates one example of a control methodology that could be implemented to manage common-mode voltages at the AC point of connection for the power converter arrangement 500, which includes selective control over various modulation parameters.

In some instances, the methodology may start at block 601 in which the sampling method for the power converters is selected, e.g. for PWM modulation, whether natural, symmetric, or asymmetric sampling is applied and whether the sampling single- or doubled edged, or for space vector modulation, the relevant sampling and control methodology.

In block 602 the frequency of interest for which common-mode components are to be minimised can be selected. As described above this may typically be around the switching angular frequency, denoted $\omega_c$. For example, the relevant frequency of interest may be selected as $m\omega_c - n\omega_0$, for low values of $m, n$ where $\omega_0$ is the fundamental angular frequency at which the active and reactive power is exchanged at the AC point of connection. Higher order harmonics (large $m$) carry little energy and thus may not be of as much concern. In addition, as noted above, the parallel power converters are generally not synchronised and therefore their base frequencies can drift, in use, due to the separate switching controllers. Higher frequencies may there be within the synchronisation error of the power converters.

In some implementations, the AC grounding impedances for each of the power converters, i.e. impedances Z1 and Z2 may be selected or controlled based on the chosen frequency of interest. Where at least one of the AC impedances is implemented by an active device that emulates a desired impedance, the grounding impedance(s) may be controlled to implement the selected impedance.

At block 604, a modulation depth, M, for each of the two power converters 101-1 and 101-2 may be selected.

The methodology may then, at block 605 involve determining the common-mode voltage at the AC point of connection, denoted as $V_{CMAC}$. To determine the common-mode voltage at the AC point of connection, the voltage of each phase may be computed. One skilled in the art will be aware of various methods by which the relevant voltage of each phase can be determined, given the relevant sampling method selected at block 601.

For example, for a double-edged naturally sampled PWM method, the voltage of a given phase $V_k$ can be determined by the expression:

$$V_k(t) = \frac{V_{dc}}{2}\left\{ 1 + M\cos\left(\omega_0 t - k\frac{2\pi}{3}\right) \right.$$
$$\left. + \frac{4}{\pi}\sum_{m=1}^{\infty}\sum_{n=-\infty}^{\infty}\frac{1}{m}\left\{\sin\left([m+n]\frac{\pi}{2}\right)J_n\left(m\frac{\pi}{2}M\right)\cos\left(m[\omega_c(t+T_d)] + n\left[\omega_0 t - k\frac{2\pi}{3}\right]\right)\right\}\right\}$$

Eqn. 5

where $k = 0,1,2$ denotes the index for each of the converter phase legs respectively, $Vdc$ is the rail-to-rail DC voltage, $M$ is the modulation depth defined as the peak of the phase-to-phase AC output voltage divided by $Vdc$, $J_n(x)$ is the Bessel function of the first kind and $n$-th order with argument $x$, $T_d$ is the actuation delay, $\omega_0$ is the fundamental angular frequency at which the active and reactive power is exchanged at the AC-PoC, and $\omega_c$ is the carrier or switching angular frequency.

At the AC point of connection, the common-mode voltage seen by the neutral point of a star-connected machine for each of the power converters can be determined by:

$$V_{CM}(t) = \frac{V_0(t) + V_1(t) + V_2(t)}{3}$$

<div align="right">Eqn. 6</div>

The overall resultant common mode voltage at the AC point of connection, denoted as $V_{CMAC}$, can then be determined by superposition, i.e. by summing the relevant voltages.

At block 606 the methodology determines whether the harmonic content of the common-mode voltage $V_{CMAC}$ at the AC point of connection is below a desired power threshold. If so, the relevant modulation parameters can be used by the controller 501 for controlling the power converters 101-1 and 101-2.

If, however, the harmonic content of interest exceeds the desired threshold, the methodology may adjust at least one parameter to reduce relevant harmonic content.

If at least one of the AC grounding impedances is controllably variable, the method may involve determining 606 whether the relevant grounding impedance is at a limit of a range of acceptable values of impedance and, if not, modifying 608 the relevant AC impedance and then recalculating the common-mode voltage $V_{CMAC}$ at the AC point of connection. This may be repeated iteratively until either the harmonic content is below the desired power threshold, which case the workflow may cease and the controller 501 uses the determined parameters, or the limit for the grounding impedance is reached.

If the AC grounding impedance is not variable, or limit for the grounding impedance is reached, the method may involve determining 609 whether the actuation delay $T_d$ between the power converters is at a limit of a range of acceptable values and, if not, modifying 610 the actuation delay and then recalculating the common-mode voltage $V_{CMAC}$ at the AC point of connection. This may be repeated iteratively until either the harmonic content is below the desired power threshold, which case the workflow may cease and the controller 501 uses the determined parameters, or the limit for the actuation delay is reached, in which case the methodology may move on to varying the modulation depth M.

The method may thus involve determining 611 whether the modulation depth M is at a limit of a range of acceptable values and, if not, modifying 612 the modulation depth M and then recalculating the common-mode voltage $V_{CMAC}$ at the AC point of connection. This may be repeated iteratively until either the harmonic content is below the desired power threshold, which case the workflow may cease and the controller 501 uses the determined parameters, or the limit for the modulation depth M is reached.

In the example workflow of FIG. 6, if a limit of an acceptable range of modulation depth is reached without the power of harmonic content of interest being satisfactory, i.e. below the limit, the workflow may involve modifying the switching frequency for the power converters and then restarting the workflow from block 602. The methodology may then be followed iteratively until a set of modulation parameters is identified that maintains the harmonic content of interest below the desired power threshold.

Following the workflow of the example of FIG. 6 thus results in a set of modulation parameters that can minimise at least some harmonic content of the common-mode voltage at the AC point of coupling by effectively controlling the power converters to provide active cancellation of at least some of the relevant harmonic content. Reducing the resultant common-mode voltage at the AC point of connection can thus reduce the impact on aging of machine components as discussed above and/or improve performance without the need for costly, bulky and weighty filter arrangements. The methodology can also adapt for changes in system parameters.

It will of course be understand that the workflow illustrated in FIG. 6 is just one example and the order in which the various parameters may be modified or adjusted could be implemented differently in some cases, for instance in some cases it may be preferred to adjust the modulation depth before adjusting the actuation delay and/or it may be preferred to adjust a first parameter within a preferred range for that first parameter and then adjust a second parameter within a preferred range for that second parameter before returning to adjusting the first parameter in a wider range to try to identify a satisfactory set of parameters. One skilled in the art will be aware of various different search strategies that could be implemented to search within the acceptable parameter space.

The controller 501 may be implemented by a suitable apparatus and could for instance by implemented by a suitable programmed processor, such as general purpose processor running software and/or firmware stored in non-volatile memory, or could be implement as some suitable ASIC. The controller 501 is illustrated as separate to the power converters 101-1 and 101-2 for clarity, but it will be understood that the functionality of the controller 501 could be, at least partly, provided by a switching controller of one of the power converters and/or the power converters 101-1 and 101-2 may together collectively provide the functionality of the controller 501.

Embodiments of the present disclosure thus relate to methods and apparatus that provide strategies for the implementation and control of parallel connected AC-to-DC power converters that minimise, or at least reduce, common-mode components at the AC point of connection and/or the DC point of connection. The power converters are implemented and controlled so that operation of the parallel connected power converters provides some inherent cancellation of common-mode voltage components. This can reduce the requirements for filtering, with consequent

<div align="center">9</div>

savings in size, cost and weight, as well as improved performance and aging.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

**Claims**

1. A power converter apparatus comprising:

   a first power converter configured to receive a first AC voltage generated by a first electrical machine and output a DC voltage on a DC bus;
   a second power converter connected in parallel with the first power converter to receive a second AC voltage generated by the first electrical machine and output the DC voltage on the DC bus;
   wherein the first power converter is coupled to a first winding arrangement for receiving the first AC voltage and the first winding arrangement is grounded by a first impedance and the second power converter is coupled to a second winding arrangement for receiving the second AC voltage and the second winding arrangement is grounded by a second impedance, wherein the first impedance has an effective impedance value which is different to that of the second impedance such, in use, a zero-sequence current between the first and second power converters at least partly cancels a common-mode voltage component.

2. The power converter apparatus of claim 1, wherein the first impedance has an effective impedance value which is different to that of the first impedance such, in use, a zero-sequence impedance of the first power converter is 180° out of phase with a zero-sequence impedance of the second power converter.

3. The power converter apparatus of claim 1 or claim 2, wherein the first impedance has an effective impedance value which is different to that of the first impedance such, in use, a zero-sequence impedance of the first power converter has a first value $Z_{0-1}$ and a zero-sequence impedance of the second power converter has a second value $Z_{0-2}$, where $Z_{0-1} = -Z_{0-2}$.

4. The power converter apparatus of any preceding claim, wherein the wherein the first impedance is a capacitive impedance with a capacitance value Cg and the second impedance is an inductive impedance with an inductance value Lg.

5. The power converter apparatus of claim 4, where $Cg = 1/\omega^2 Lg$, where $\omega$ is a frequency of the common-mode voltage component.

6. The power converter apparatus of claim 5, wherein $\omega$ is equal to a switching frequency of the first and second power converters or harmonic thereof.

7. The power converter apparatus of claim 5, wherein the first and second power converters are configured to implement triplen harmonic injection and $\omega$ is equal to a frequency of the triplen harmonic injection.

8. The power converter apparatus of any of claims 4 to 7, wherein the first impedance comprises one or more capacitors and the second impedance comprises one or more inductors.

9. The power converter apparatus of any of claims 4 to 7, wherein at least one of the first and second impedances comprises an active impedance device for providing, in use, an emulated impedance.

10. The power converter apparatus of any preceding claim, wherein each of the first and second winding arrangements comprises a respective star winding arrangement and the first and second impedances are respectively connected between a respective star-point of the first and second winding arrangements and ground.

11. The power converter apparatus of any preceding claim, wherein the first and second winding arrangements are configured as a split-winding arrangement.

12. The power converter apparatus of any preceding claim, wherein each of the first and second power converters comprise a three-phase two-level voltage source converter.

13. The power converter apparatus of any preceding claim, further comprising a DC grounding impedance connecting a voltage rail of the DC bus to ground.

14. The power converter apparatus of any preceding claim, further comprising the electrical machine.

15. A vehicle comprising the power converter apparatus of any preceding claim.

FIG. 1a

FIG. 1b

FIG. 2

FIG. 3

FIG. 4

FIG. 5

Choose Sampling Method
601

Choose Frequency for CM minimisation
602

Set AC grounding impedance
603

Set Modulation Depth, M
604

Determine voltage for each phase and resultant CM voltage at AC-PoC, $V_{CMAC}$
605

$V_{CMAC}$ < threshold?
606 — Yes → End

No

Modify AC grounding impedance
608 ← No — Is AC grounding at limit?
607

Yes

Modify $T_d$
610 ← No — Is $T_d$ at limit?
609

Yes

Modify M
612 ← No — Is M at limit?
611

Yes

Modify switching frequency
613

FIG. 6

## EP 4 765 606 A1

**EUROPEAN SEARCH REPORT**

Europäisches Patentamt
European Patent Office
Office européen des brevets

**Application Number**

EP 25 21 7592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/021317 A1 (KATAGIRI KODAI [JP] ET AL) 20 January 2022 (2022-01-20) * paragraph [0044]; figure 12 * ----- | 1-15 | INV. H02M1/12 H02M7/219 H02M7/493 |
| A | JP 2024 074107 A (FUJI ELECTRIC CO LTD) 30 May 2024 (2024-05-30) * paragraphs [0052], [0053]; figure 1 * ----- | 1-15 | ADD. H02M7/23 H02M7/5387 |
| A | JP 2009 189171 A (NIPPON SOKEN; TOYOTA MOTOR CORP) 20 August 2009 (2009-08-20) * paragraphs [0028], [0039]; figure 2 * ----- | 1-15 | |

TECHNICAL FIELDS SEARCHED (IPC)

H02M

The present search report has been drawn up for all claims

| Place of search | Date of completion of the search | Examiner |
|---|---|---|
| The Hague | 16 March 2026 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 7592

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | | Publication date | Patent family member(s) | | Publication date |
|---|---|---|---|---|---|
| US 2022021317 | A1 | 20-01-2022 | CN | 113544967 A | 22-10-2021 |
| | | | DE | 112019006967 T5 | 02-12-2021 |
| | | | JP | 7086268 B2 | 17-06-2022 |
| | | | JP | WO2020178929 A1 | 14-10-2021 |
| | | | US | 2022021317 A1 | 20-01-2022 |
| | | | WO | 2020178929 A1 | 10-09-2020 |
| JP 2024074107 | A | 30-05-2024 | NONE | | |
| JP 2009189171 | A | 20-08-2009 | JP | 5203737 B2 | 05-06-2013 |
| | | | JP | 2009189171 A | 20-08-2009 |

For more details about this annex : see Official Journal of the European Patent Office, No. 12/82